# EUROPÄISCHE PATENTSCHRIFT

(11) **EP 1 826 589 B1**
(45) Veröffentlichungstag und Bekanntmachung des Hinweises auf die Patenterteilung: **02.09.2009**
(21) Anmeldenummer: 07001602.7
(22) Anmeldetag: 25.01.2007
(51) Int. Cl.: G01V 8/10

(54) **Optischer Sensor zur Überwachung einer Schutzzone**
Optical sensor for monitoring a protection zone
Capteur optique destiné à la surveillance d'une zone de sécurité

(30) Priorität: 25.02.2006 DE 102006008805; 11.08.2006 DE 202006012351 U
(43) Veröffentlichungstag der Anmeldung: 29.08.2007
(73) Patentinhaber: Leuze electronic GmbH + Co. KG, 73277 Owen/Teck (DE)
(72) Erfinder: Lohmann, Lutz, Dr., 82140 Olching (DE)
(74) Vertreter: Ruckh, Rainer Gerhard

(56) Entgegenhaltungen:
- EP-A- 1 331 433
- EP-A1- 1 353 196
- EP-A2- 1 164 556
- DE-U1- 29 500 873

## Beschreibung

Die Erfindung betrifft einen optischen Sensor zur Überwachung einer Schutzzone.

Derartige optische Sensoren werden insbesondere im Bereich des Personenschutzes eingesetzt, wobei als Schutzzone ein Gefahrenbereich an einem von einer Maschine gebildeten Arbeitsmittel überwacht wird. Ein für derartige Überwachungsaufgaben eingesetzter optische Sensor ist aus der DE 299 20 715 U1 bekannt. Der dort beschriebene optische Sensor ist als Lichtschrankenanordnung, insbesondere als Lichtgitter ausgebildet. Wird mit dieser Lichtschrankenanordnung ein Objekt oder eine Person detektiert, wird in der Lichtschrankenanordnung eine Objektmeldung generiert, welche zum Abschalten der Maschine führt. Dadurch erfüllt die Lichtschrankenanordnung ihre Sicherheitsfunktion, da mit dieser erfasst wird, wenn sich eine Person in den Gefahrenbereich begibt. Jedoch würde auch ein Eindringen eines mit der Maschine zu bearbeitenden Werkstücks in den Gefahrenbereich zu einer Objektmeldung in der Lichtschrankenanordnung führen, welche dann ein Abschalten der Maschine zur Folge hätte. Da es sich bei dem zu bearbeitenden Werkstück um ein nicht sicherheitskritisches Objekt handelt, ist ein Abschalten der Maschine bei dessen Detektion innerhalb des Gefahrenbereichs unnötig und daher unerwünscht.

Um ein derartiges unnötiges Abschalten der Maschine zu vermeiden, sind bei der Anordnung der DE 299 20 715 U1 zusätzlich zu der Lichtschrankenanordnung am Eingang beziehungsweise Ausgang des Gefahrenbereichs sogenannte Mutingsensoren vorgesehen, die eine Unterscheidung zwischen Menschen oder allgemein sicherheitskritischen Objekten und zulässigen Gegenständen als nicht sicherheitskritischen Objekten ermöglichen. Wird ein zulässiger Gegenstand detektiert, so erzeugen die Mutingsensoren ein Überbrückungssignal das bewirkt, dass trotz einer Unterbrechung der Lichtschranken der Lichtschrankenanordnung die Abschaltfunktion vorübergehend zu deaktivieren, das heißt die Maschine nicht abzuschalten ist. Wird hingegen eine der Lichtschranken unterbrochen und erzeugen die Mutingsensoren kein Überbrückungssignal, so wird die zu überwachende Maschine abgeschaltet.

Nachteilig hierbei ist, dass die von Reflexionslichtschranken gebildeten Mutingsensoren als weitere Sensoren zur Lichtschrankenanordnung einen erheblichen konstruktiven Aufwand bedingen und damit auch eine erhebliche Erhöhung des Kostenaufwands bei der Realisierung der Gefahrenbereichsabsicherung verursachen. Dieser Nachteil wird dadurch noch verstärkt, dass sowohl am Eingang und am Ausgang jeweils ein Paar von Mutingsensoren vorgesehen sein muss, damit die zulässigen Objekte von nicht zulässigen Objekten unterschieden werden können.

Die EP 1 331 433 A2 betrifft eine optoelektronische Schutzeinrichtung in Form eines Lichtgitters. Das Lichtgitter weist eine Sendereinheit mit einer Anordnung von Lichtstrahlen emittierenden Sendern und einer Empfängereinheit mit einer Anordnung von Lichtstrahlen empfangenden Empfängern auf. Jeweils ein Sender und ein Empfänger bilden eine Strahlachse, wobei bei einem freien Überwachungsbereich die Lichtstrahlen des Senders auf den zugeordneten Empfänger treffen. Ein Sicherheitsschaltsignal wird ausgelöst, wenn eine der Strahlachsen unterbrochen wird. Um unnötige Sicherheitsschaltsignale bei Eindringen nichtsicherheitskritischer Objekte zu vermeiden, können Bereiche des Lichtgitters, das heißt vorgegebene Strahlachsen überbrückt, das heißt gemutet werden, so dass bei Unterbrechung einer dieser gemuteten Strahlachsen kein Sicherheitsschaltsignal generiert werden kann. Ein derartiger Muting-Bereich kann dadurch definiert werden, dass die Kontur eines nichtsicherheitskritischen Objekts erfasst und eingelernt wird, so dass diese Kontur den gemuteten Bereich bildet.

In der EP 1 164 556 A2 wird eine optoelektronische Vorrichtung zur Überwachung eines Schutzbereichs mit zumindest einer berührungslos wirkenden Schutzeinrichtung beschrieben. Die berührungslos wirkende Schutzeinrichtung umfasst eine Auswerteeinheit zum Erzeugen eines Gegenstandfeststellungssignals beim Eindringen eines Objektes in den Schutzbereich. Mit der berührungslos wirkenden Schutzeinrichtung ist eine Bilderfassungseinheit zum Erfassen eines flächigen oder räumlichen Bilderfassungsbereichs gekoppelt, mit der ein nahe am Schutzbereich, jedoch außerhalb des Schutzbereichs gelegener sekundärer Überwachungsbereich erfassbar ist. Die berührungslos wirkende Schutzeinrichtung ist durch die Bilderfassungseinheit ansteuerbar. Insbesondere können durch die Bilderfassungseinheit zulässige Objekte erkannt werden. Ist dies der Fall, wird die Schutzfunktion ganz oder bereichsweise deaktiviert, so dass das zulässige Objekt den Schutzbereich passieren kann.

Die EP 1 353 196 A1 betrifft ein Verfahren zur Erfassung von zwei oder mehr beweglichen Objekten in einem Überwachungsbereich, wobei ein horizontales Lichtgitter mit einer Mehrzahl von zueinander parallelen Lichtschranken verwendet wird. Damit sich mehrere Objekte gleichzeitig durch das Schutzfeld bewegen können, ohne die Überwachungsfunktion zu deaktivieren, werden in Kombination die Vorgabe eines Eintrittsbereiches für die Objekte, die Größe der Objekte sowie der Abstand beziehungsweise die Abstände zwischen den Objekten überwacht. Bei Nichterfüllung wenigstens eines dieser drei Kriterien wird ein Steuersignal abgegeben und beispielsweise die Anlage abgestellt.

Die DE 295 00 873 U1 betrifft ein Lichtgitter, bei welchem zulässige Objekte durch einen Vergleich aktuell ermittelter Konturen mit abgespeicherten Konturen erkannt werden.

Der Erfindung liegt die Aufgabe zugrunde eine sensorüberwachte Gefahrenbereichsüberwachung bereitzustellen, mit welcher mit möglichst geringem Aufwand eine sichere Überwachung eines Gefahrenbereichs an einem Arbeitsmittel durchführbar ist, ohne dabei die Verfügbarkeit des Arbeitsmittels unnötig einzuschränken.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Überwachung einer Schutzzone an einem Arbeitsmittel und umfasst eine Lichtempfangseinheit zur Erfassung von Objekten innerhalb der Schutzzone. In einer Auswerteeinheit wird durch Auswertung von mit der Lichtempfangseinheit registrierten Objektmerkmalen eine Unterscheidung von sicherheitskritischen Objekten und nichtsicherheitskritischen Objekten durchgeführt. Bei Erfassen eines sicherheitskritischen Objekts in der Schutzzone wird eine Objektmeldung generiert und bei Erfassen eines nichtsicherheitskritischen Objekts in der Schutzzone wenigstens ein Bereich dieser Schutzzone überbrückt, so dass ein Eindringen eines Objekts in diesen überbrückten Bereich nicht zur Generierung einer Objektmeldung führt. Die Objektmerkmale sind von auf den nichtsicherheitskritischen Objekten angeordneten Markierungen gebildet. Mit dem optischen Sensor sind in den Markierungen enthaltene Kodierungen erfassbar. Der überbrückte Bereich der Schutzzone ist durch die Kodierungen vorgebbar ist.

Der Grundgedanke der Erfindung besteht darin, dass mit einem optischen Sensor eine Doppelfunktion derart erfüllt wird, dass mit diesem nicht nur eine Gefahrenbereichsüberwachung durchgeführt werden kann sondern zugleich auch eine Mutingfunktion bereitgestellt wird, mittels derer die Verfügbarkeit des Arbeitsmittels erhöht wird.

Zur Durchführung der Gefahrenbereichsüberwachung wird mit der Lichtempfangseinheit des optischen Sensors detektiert, ob ein sicherheitskritisches Objekt in die Schutzzone eindringt. Ist dies der Fall, generiert der optische Sensor eine Objektmeldung, wodurch das Arbeitsmittel abgeschaltet wird um insbesondere eine Gefährdung von Personen in dem von der Schutzzone gebildeten Gefahrenbereich auszuschließen.

Dabei erfolgt im optischen Sensor eine Unterscheidung von sicherheitskritischen Objekten wie Personen einerseits und nicht sicherheitskritischen Objekten andererseits. Dringt ein nicht sicherheitskritisches Objekt in die Schutzzone ein, so erfolgt ein Muting derart, dass wenigstens ein Bereich der Schutzzone überbrückt, das heißt gemutet wird, so dass dann in diesem Bereich eindringende Objekte, unabhängig davon, ob diese sicherheitskritische Objekte oder nicht sicherheitskritische Objekte sind, nicht zu einem Abschalten des Arbeitsmittels führen.

Damit führen unkritische Objekteingriffe in der Schutzzone, die beispielsweise durch Werkstücke bedingt sind, die mit dem Arbeitsmittel bearbeitet werden

werden dabei Objektmerkmale zur Identifizierung von nichtsicherheitskritischen Objekten ausgewertet. Zweckmäßigerweise sind hierzu die entsprechenden Objektmerkmale in der Auswerteeinheit abgespeichert, wobei diese hierzu beispielsweise in Einlernvorgängen eingelernt werden können.

Die die nichtsicherheitskritischen Objekte charakterisierenden Objektmerkmale können von charakteristischen geometrischen Strukturen wie bestimmten Oberflächenformen, Kantenstrukturen oder dergleichen gebildet sein.

Weiterhin können die die nichtsicherheitskritischen Objekte charakterisierenden Objektmerkmale von Markierungen gebildet sein, die unterschiedliche Kodierungen enthalten. Diese Kodierungen können besonders vorteilhaft Informationen über die Größen der Muting-Bereiche sowie gegebenenfalls auch über die Zeitdauer der Aktivierung dieser Muting-Bereiche erhalten. Damit kann durch Auslesen der Kodierungen mittels des Sensors unmittelbar der jeweilige Muting vorgegeben werden.

Die Verwendung von derartigen Kodierungen enthaltenden Markierungen ist insbesondere bei nichtsicherheitskritischen Objekten in Form von Fahrzeugen oder generell Fördermitteln vorteilhaft, die entlang vorgegebener Bahnen durch das Schutzfeld bewegt werden. Diese Markierungen befinden sich bevorzugt an den zuerst in die Schutzzone eindringenden Vorderflanken des Fahrzeugs. Die Kodierungen der Markierungen geben bevorzugt den Verlauf des Muting-Bereichs während der gesamten Durchfahrt des Fahrzeugs durch die Schutzzone vor. Damit kann allein durch die Markierungen am Fahrzeuganfang der Muting-Bereich für die gesamte Kontur des Fahrzeugs als nichtsicherheitskritisches Objekt vorgegeben werden. Besonders vorteilhaft können die Markierungen auch Informationen über unterschiedliche Beladungen als weitere Bestandteile des nichtsicherheitskritischen Objekts enthalten. Durch Auslesen dieser Markierungen kann somit der zeitliche Verlauf des Muting-Bereichs an unterschiedliche Beladungszustände des Fahrzeugs angepasst werden.

teilhaft werden dabei Objektmerkmale zur Identifizierung von nichtsicherheitskritischen Objekten ausgewertet. Zweckmäßigerweise sind hierzu die entsprechenden Objektmerkmale in der Auswerteeinheit abgespeichert, wobei diese hierzu beispielsweise in Einlernvorgängen eingelernt werden können.

Erfindungsgemäß sind die die nichtsicherheitskritischen Objekte charakterisierenden Objektmerkmale von Markierungen gebildet, die unterschiedliche Kodierungen enthalten. Diese Kodierungen können besonders vorteilhaft Informationen über die Größen der Muting-Bereiche sowie gegebenenfalls auch über die Zeitdauer der Aktivierung dieser Muting-Bereiche erhalten. Damit kann durch Auslesen der Kodierungen mittels des Sensors unmittelbar der jeweilige Muting vorgegeben werden.

Die Verwendung von derartigen Kodierungen enthaltenden Markierungen ist insbesondere bei nichtsicherheitskritischen Objekten in Form von Fahrzeugen oder generell Fördermitteln vorteilhaft, die entlang vorgegebener Bahnen durch das Schutzfeld bewegt werden. Diese Markierungen befinden sich bevorzugt an den zuerst in die Schutzzone eindringenden Vorderflanken des Fahrzeugs. Die Kodierungen der Markierungen geben bevorzugt den Verlauf des Muting-Bereichs während der gesamten Durchfahrt des Fahrzeugs durch die Schutzzone vor. Damit kann allein durch die Markierungen am Fahrzeuganfang der Muting-Bereich für die gesamte Kontur des Fahrzeugs als nichtsicherheitskritisches Objekt vorgegeben werden. Besonders vorteilhaft können die Markierungen auch Informationen über unterschiedliche Beladungen als weitere Bestandteile des nichtsicherheitskritischen Objekts enthalten. Durch Auslesen dieser Markierungen kann somit der zeitliche Verlauf des Muting-Bereichs an unterschiedliche Beladungszustände des Fahrzeugs angepasst werden.
- Figur 2:: Anordnung des optischen Sensors gemäß Figur 1 zur Überwachung einer Schutzzone an einem Arbeitsmittel mit einer in der Schutzzone angeordneten Palette.
- Figur 3:: Abbildung der Palette gemäß Figur 2 auf der Kamera des optischen Sensors bei der Anordnung gemäß Figur 2.
- Figur 4:: Anordnung des optischen Sensors gemäß Figur 1 oberhalb eines schienengeführten Fördermittels.
- Figur 5:: Schematische Darstellung eines zweiten Ausführungsbeispiels des optischen Sensors.

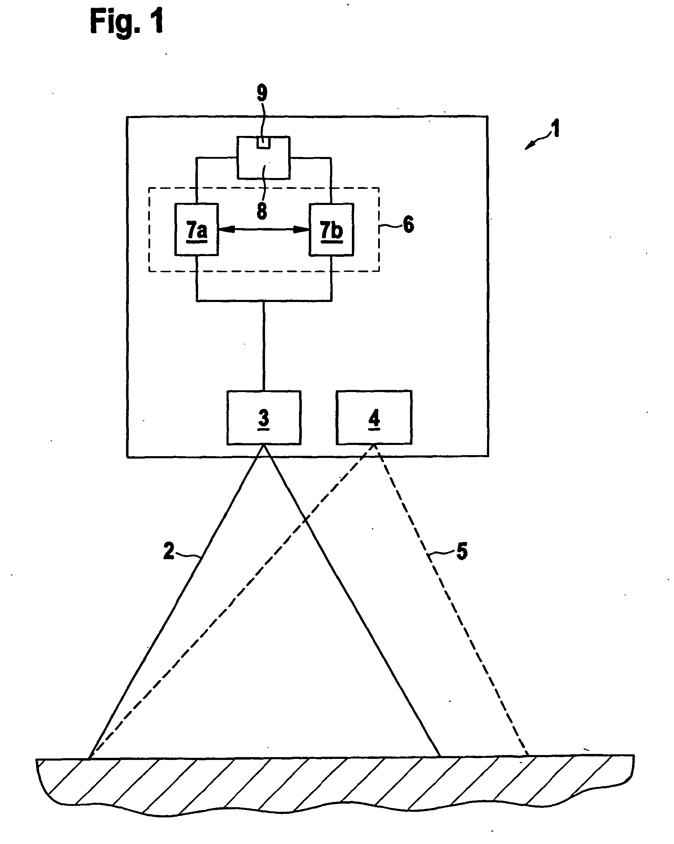

Figur 1 zeigt schematisch ein erstes Ausführungsbeispiel eines optischen Sensors 1 zur Erfassung von Objekten innerhalb einer Schutzzone 2. Der optische Sensor 1 weist zur Detektion von Objekten innerhalb der Schutzzone 2 als Lichtempfangseinheit eine Kamera 3 auf. Die Kamera 3 besteht im vorliegenden Fall aus einer CCD-Zeile, das heißt einem CCD-Sensor mit einer zeilenförmigen Anordnung von Empfangselementen. Alternativ kann die Kamera 3 auch von einer CMOS-Zeile gebildet sein. Bei derartigen zeilenförmigen Kameras 3 bildet die Schutzzone 2 einen flächigen Bereich. Generell können mit dem optischen Sensor 1 auch Schutzzonen 2 in Form von dreidimensionalen Bereichen überwacht werden. In diesem Fall besteht die Kamera 3 aus einem CCD-Sensor oder einem CMOS-Sensor mit einer matrixförmigen Anordnung von Empfangselementen. Zur Ausleuchtung der Schutzzone 2 weist der optische Sensor 1 ein Beleuchtungssystem 4 auf. Mit den vom Beleuchtungssystem 4 emittierten Lichtstrahlen 5 wird die gesamte Schutzzone 2 ausgeleuchtet, wobei im einfachsten Fall mit dem Beleuchtungssystem 4 hierzu ein stationäres Lichtstrahlbündel generiert wird. Alternativ kann das Beleuchtungssystem als scannendes System ausgebildet sein.

Die mit der Kamera 3 generierten, Bildinformationen enthaltenden Signale werden in einer Auswerteeinheit 6 ausgewertet. Zum Einsatz des optischen Sensors 1 im Bereich des Personenschutzes und zur Erfüllung des hierfür geforderten Sicherheitsniveaus weist die Auswerteeinheit 6 einen redundanten Aufbau auf. Im vorliegenden Fall besteht die Auswerteeinheit 6 aus zwei sich gegenseitig zyklisch überwachenden Mikroprozessoren 7a, b. Die Signale der Kamera 3 werden zur Auswertung in beide Mikroprozessoren 7a, b eingelesen. Hierzu ist die Kamera 3 über Zuleitungen mit beiden Mikroprozessoren 7a, b verbunden. Weiterhin erfolgt in der Auswerteeinheit 6 auch die Ansteuerung des Beleuchtungssystems 4, welches mit nicht dargestellten Zuleitungen mit der Auswerteeinheit 6 verbunden ist.

Die Auswertung der Signale der Kamera 3 in der Auswerteeinheit 6 erfolgt derart, dass ein binäres Objektfeststellungssystem generiert wird, dessen Schaltzustände angeben, ob sich ein Objekt in der Schutzzone 2 befindet oder nicht. Zur Ausgabe dieses Objektfeststellungssignals ist eine Ausgangsschaltung 8 mit einem Schaltausgang 9 vorgesehen.

Für Anwendungen im Bereich des Personenschutzes wird typischerweise mit dem optischen Sensor 1 als Schutzzone 2 ein Gefahrenbereich an einem Arbeitsmittel überwacht. Um Gefährdungen insbesondere für Personen auszuschließen, wird bei einer Objektmeldung, die durch einen Objekteingriff in der Schutzzone 2 im optischen Sensor 1 generiert wird, das Arbeitsmittel deaktiviert. Das Arbeitsmittel ist somit nur dann aktiviert, wenn das Objektfeststellungssignal den Schaltzustand "freie Schutzzone" einnimmt. Zur Auswertung des Arbeitsmittels ist der Schaltausgang 9 an das Arbeitsmittel angeschlossen, so dass das Objektfeststellungssignal vom optischen Sensor 1 in das Arbeitsmittel übertragen wird.

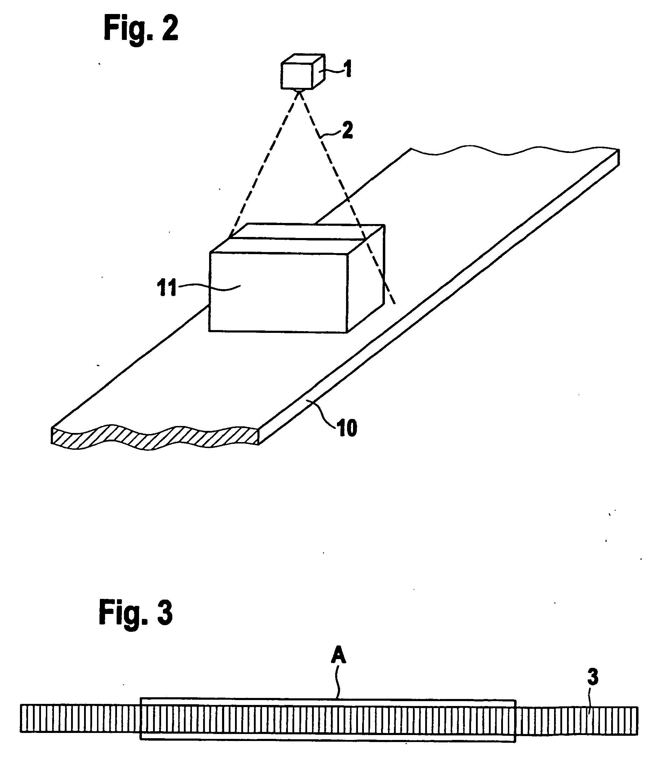

Figur 2 zeigt eine Applikation des optischen Sensors gemäß Figur 1 zur Gefahrenbereichsüberwachung an einem Transportband 10. Dieses Transportband 10 bildet zusammen mit einem nicht dargestellten Roboter ein Arbeitsmittel. Wie aus Figur 2 ersichtlich ist der optische Sensor 1 oberhalb des Transportbands 10 so angeordnet, dass mit diesem als Gefahrenbereich eine Schutzzone 2 überwacht wird, die in einer vertikalen Ebene orientiert ist. Die Schutzzone 2 erstreckt sich dabei über die gesamte Breite des Transportbands 10.

Um Gefährdungen von Personen oder generell sicherheitskritischen Objekte auszuschließen, wird bei einer Detektion eines derartigen sicherheitskritischen Objekts in der Schutzzone 2 eine Objektmeldung generiert, wodurch das Arbeitsmittel, das heißt im vorliegenden Fall der Roboter und das Transportband 10 deaktiviert, das heißt stillgesetzt werden.

Figur 2 zeigt eine auf dem Transportband 10 transportierte Palette 11, die mit dem Roboter aufgenommen und bearbeitet werden soll. Da somit die Palette 11 als Werkstück ein nicht sicherheitskritisches Objekt darstellt, welches durch die Schutzzone 2 hindurch dem Roboter zugeführt werden muss, würde ein durch die Detektion der Palette 11 mittels des optischen Sensors 1 generierter Abschaltbefehl für das Arbeitsmittel einen unnötigen Stillstand bedeuten.

Um derartige unnötige Stillstände zu vermeiden erfolgt im optischen Sensor 1 eine Erkennung derartiger nicht sicherheitskritischer Objekte sowie deren Unterscheidung von sicherheitskritischen Objekten. Dies ist in Figur 3 veranschaulicht. Diese Darstellung zeigt die CCD-Zeile des optischen Sensors 1 für die Anordnung gemäß Figur 2. Der Bereich der CCD-Zeile, auf welchen die Palette 11 abgebildet wird, ist in Figur 2 mit A bezeichnet.

Zur Erkennung der Palette 11 als nicht sicherheitskritisches Objekt werden in der Auswerteeinheit 6 des optischen Sensors 1 bevorzugt nur die Flanken des Bereichs A, das heißt die Kanten der Palette 11 ausgewertet. Die Erkennung des nicht sicherheitskritischen Objekts kann dadurch erfolgen, dass in einem Einlernvorgang die Kantenlagen des nicht sicherheitskritischen Objekts auf der CCD-Zeile eingelernt werden und in der nachfolgenden Betriebsphase des nicht sicherheitskritischen Objekts durch Vergleich der aktuellen Signale der CCD-Zeile mit den eingelernten Werten verglichen wird, wobei das nicht sicherheitskritische Objekt als erkannt gilt, falls die aktuellen Signale mit den eingelernten Werten übereinstimmen. Alternativ kann das nicht sicherheitskritische Objekt auch anhand in der Auswerteeinheit 6 abgespeicherter Parameterwerte erkannt werden. Wie aus Figur 2 ersichtlich erstreckt sich die Palette 11 nahezu über die gesamte Breite des Transportbands 10 und ist somit signifikant breiter als eine Person als sicherheitskritisches Objekt. Durch Vorgabe einer Mindestbreite in der Auswerteeinheit 6, die bei der vorliegenden Palette 11 überschritten wird, wird somit die Palette 11 als nicht sicherheitskritisches Objekt in der Auswerteeinheit 6 klassifiziert.

Für den Fall, dass die Breite der Palette 11 in derselben Größenordnung wie die Breite einer Person ist, ist mit einer Bildaufnahme mittels der CCD-Zeile keine sichere Unterscheidung der Palette 11 von einer Person möglich. In diesem Fall kann durch wenigstens zwei in einem bestimmten Zeitintervall aufeinander folgenden Bildaufnahmen mit der CCD-Zeile eine zeitaufgelöste Information über das detektierte Objekt gewonnen werden, wodurch eine erhöhte Detektionssicherheit zur Identifizierung des nicht sicherheitskritischen Objekts erzielt wird.

Generell kann auch die gesamte Kontur des Objekts detektiert werden um zu entscheiden, ob es sich um ein nichtsicherheitskritisches Objekt handelt. In diesem Fall bildet die gesamte Oberfläche an der Oberseite der Palette 11 das Objektmerkmal, anhand dessen das nichtsicherheitskritische Objekt erkannt wird. Sitzt beispielsweise eine Person als sicherheitskritisches Objekt auf der Palette 11 auf, so wird das nichtsicherheitskritische Objekt nicht als solches erkannt und in dem optischen Sensor 1 wird eine Objektmeldung generiert, die zum Abschalten des vom Robotors gebildeten Arbeitsmittels führt. Da im vorliegenden Fall die Palette 11 zur Klassifizierung als nichtsicherheitskritisches Objekt über ihre gesamte Länge detektiert werden muss, könnte es sein, dass noch während der Detektion der Palette 11 diese in den Bereich des Roboters einfährt, was zu einer Gefahrensituation führen kann, wenn beispielsweise auf dem hinteren Ende der Palette 11 eine Person sitzt. Um derartige Gefährdungen zu vermeiden, wird bei Erfassung eines sicherheitskritischen Objekts mittels des optischen Sensors 1 nicht nur ein Abschaltbefehl für das Arbeitsmittel sondern auch ein Stoppbefehl für das Transportband 10 generiert. Weiterhin wird der optische Sensor 1 so am Transportband 10 platziert, dass zwischen optischem Sensor 1 und dem Gefahrenbereich des Roboters eine Sicherheitsstrecke liegt, die der Summe aus der Länge der Palette 11 und dem Auslaufweg des Transportbands 10 nach Generierung des Stoppbefehls entspricht. Dadurch ist gewährleistet, dass die Palette 11 vom optischen Sensor 1 vollständig erfasst werden kann und ein dabei generierter Stoppbefehl so rechtzeitig generiert wird, dass die Palette 11 vor Eindringen in den Gefahrenbereich des Roboters zum Halten kommt.

Bei der Detektion eines nicht sicherheitskritischen Objekts wie der in Figur 2 dargestellten Palette 11 wird im optischen Sensor 1 ein Überbrückungssignal, das heißt ein Mutingsignal generiert. Mit diesem wird im optischen Sensor 1 als Teilbereich der Schutzzone 2 ein Muting-Beeich definiert und aktiviert.

Die Auswertung im optischen Sensor 1 erfolgt dann derart, dass eine Objektdetektion innerhalb des Muting-Bereichs nicht zur Generierung einer Objektmeldung und damit nicht zu einem Abschalten des Arbeitsmittels führt.

Bei dem Ausführungsbeispiel gemäß Figur 2 wird bei exakt mittiger Ausrichtung der Palette 11 während des gesamten Durchfahrens der Palette durch die Schutzzone 2 stets die Palette auf dem selben Bereich A der Kamera 3 (Figur 3) abgebildet.

Da dieser Bereich von der Palette 11 ausgefüllt ist und in diesen somit kein sicherheitskritisches Objekt mehr eindringen kann, wird im einfachsten Fall der dem Bereich A entsprechende Teil der Schutzzone 2 als Muting-Bereich definiert. Während ein Eindringen eines Objekts in den Muting-Bereich nicht zur Generierung einer Objektmeldung führt, führt ein Objekteingriff in den nicht gemuteten Bereich der Schutzzone 2 zur Generierung einer Objektmeldung und damit zu einem Abschalten des Arbeitsmittels.

Wie aus der Anordnung in Figur 2 ersichtlich, erstreckt sich die Palette 11 nahezu über die gesamte Breite des Transportbandes 10. Ist dieses beispielsweise von Zäunen seitlich umgeben ist gewährleistet, dass bei einer in der Schutzzone 2 befindlichen Palette 11 auch seitlich am Transportband 10 keine Person eindringen kann. Somit kann alternativ die gesamte Schutzzone 2 als Muting-Bereich aktiviert werden.

Im vorliegenden Ausführungsbeispiel ist der Muting-Bereich so lange aktiv, solange sich die Palette als nicht sicherheitskritisches Objekt innerhalb der Schutzzone 2 befindet. Durch die genannten Alternativen der Dimensionierung der Muting-Bereiche ist gewährleistet, dass eine Detektion der Palette 11 als nicht sicherheitskritische Objekte durch den optischen Sensor 1 nicht zu einem unerwünschten Abschalten des Arbeitsmittels führt.

Wird die Palette 11 aus der Schutzzone 2 heraus bewegt, wird der Muting-Bereich im optischen Sensor wieder deaktiviert. Dann führt ein Objekteingriff an beliebigen Stellen der Schutzzone 2 zu einer Objektmeldung und damit zu einem Abschalten des Arbeitsmittels.

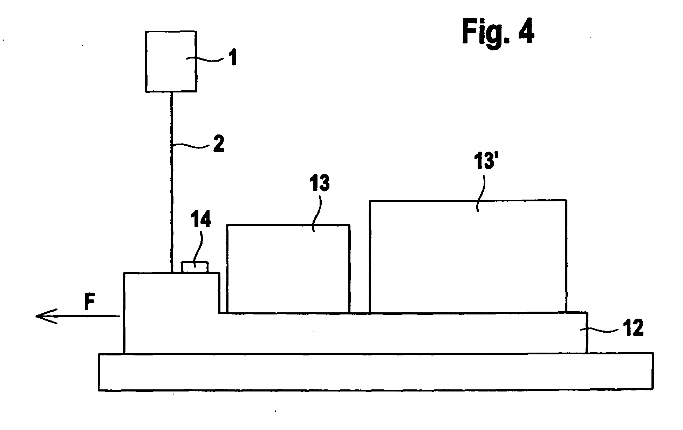

Figur 4 zeigt ein weiteres Applikationsbeispiel des optischen Sensors 1 gemäß Figur 1. In diesem Fall ist der optische Sensor 1 oberhalb eines schienengeführten Fördermittels 12 angeordnet. Der optische Sensor 1 ist wieder so ausgebildet, dass mit diesem eine in einer vertikalen Ebene orientierte Schutzzone 2 erfasst wird. Diese Ebene der Schutzzone 2 ist senkrecht zur Förderrichtung F des Fördermittels orientiert. Das Fördermittel kann wie aus Figur 4 mit Kisten 13, 13' beladen werden.

Im vorliegenden Fall sind am vorderen Ende des Fördermittels als Objektmerkmale Markierungen 14 angebracht. Die Markierungen 14 sind als spezifische geometrische Formen wie Rauten, Kreise, Dreiecke und dergleichen ausgebildet. Diese bilden Kodierungen die vom optischen Sensor 1 erfasst werden. Anhand der Markierungen 14 kann das Fördermittel als nichtsicherheitskritisches Objekt klassifiziert werden. Besonders vorteilhaft sind zudem Markierungen 14 vorgesehen, anhand derer verschiedene Beladungen des Fördermittels 12 zusätzlich als nichtsicherheitskritisches Objekt klassifiziert werden können. Durch das Erfassen der Markierungen 14 kann somit die Größe des Muting-Bereichs und dessen zeitlicher Verlauf selbsttätig nicht nur an die Kontur des Fördermittels 12 alleine sondern auch zusammen mit unterschiedlichen Beladungen angepasst werden.

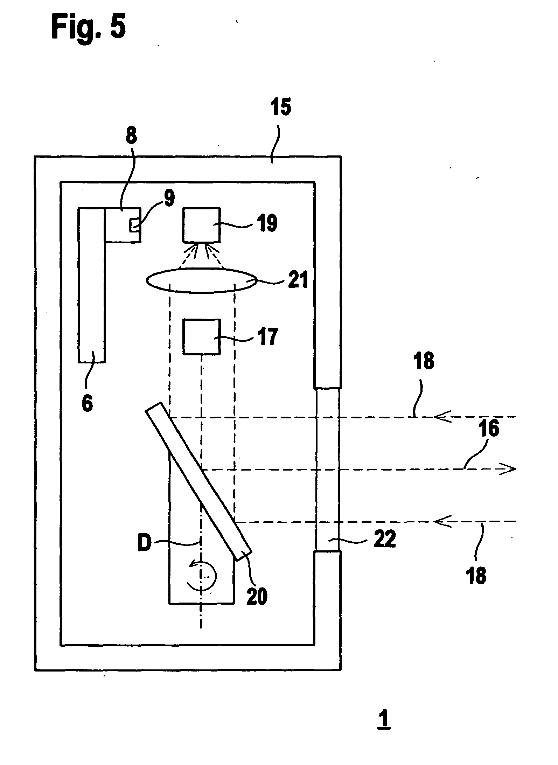

Figur 5 zeigt eine weitere Ausführungsform des optischen Sensors 1.

In diesem Fall ist der optische Sensor 1 als Flächendistanzsensor ausgebildet. Der Flächendistanzsensor ist in einem Gehäuse 15 integriert und umfasst als Distanzsensorelement einen Sendelichtstrahlen 16 emittierenden Sender 17 und einen Empfangslichtstrahlen 18 empfangenden Empfänger 19 als Lichtempfangseinheit. Die Distanzmessung erfolgt beispielsweise nach dem Laufzeitprinzip, das heißt der Sender 17 emittiert Sendelicht in Form kurzer Lichtpulse, deren Laufzeiten zu einem zu detektierenden Objekt und zurück zum Empfänger 19 als Maß für die Objektdistanz registriert und ausgewertet werden.

Die Auswertung der am Ausgang des Empfängers anstehenden Empfangssignale erfolgt in einer Auswerteeinheit 6. Der Aufbau der Auswerteeinheit 6 entspricht der Ausführungsform gemäß Figur 1. Weiterhin ist analog zur Ausführung gemäß Figur 1 der Auswerteeinheit 6 eine Ausgangsschaltung 8 mit einem Schaltausgang 9 zugeordnet.

Weiterhin umfasst der optische Sensor 1 eine Ablenkeinheit in Form eines motorisch getriebenen, um eine Drehachse D drehbaren Umlenkspiegels 20. Der Sender 17 und der Empfänger 19 sind in der Drehachse liegend angeordnet, wobei dem Empfänger eine Empfangsoptik 21 vorgeordnet ist. Die Sendelichtstrahlen 16 und die Empfangslichtstrahlen 18 werden über den Umlenkspiegel 20 abgelenkt und so periodisch innerhalb der in einer Ebene liegenden Schutzzone 2 geführt. Der von den Sendelichtstrahlen 16 überstrichene Winkelbereich und damit die Größe der Schutzzone 2 kann durch eine geeignete Dimensionierung der Breite eines Austrittsfensters 22 im Gehäuse 15, durch welches die Sendelichtstrahlen 16 und Empfangslichtstrahlen 18 geführt werden, vorgegeben werden.

### Bezugszeichenliste

- (1): Optischer Sensor
- (2): Schutzzone
- (3): Kamera
- (4): Beleuchtungssystem
- (5): Lichtstrahlen
- (6): Auswerteeinheit
- (7a): Mikroprozessoren
- (7b): Mikroprozessoren
- (8): Ausgangsschaltung
- (9): Schaltausgang
- (10): Transportband
- (11): Palette
- (12): Fördermittel
- (13): Kiste
- (13'): Kiste
- (14): Markierung
- (15): Gehäuse
- (16): Sendelichtstrahlen
- (17): Sender
- (18): Empfangslichtstrahlen
- (19): Empfänger
- (20): Umlenkspiegel
- (21): Empfangsoptik
- (22): Austrittsfenster

### Bezugszeichenliste

- (1): Optischer Sensor
- (2): Schutzzone
- (3): Kamera
- (4): Beleuchtungssystem
- (5): Lichtstrahlen
- (6): Auswerteeinheit
- (7a): Mikroprozessoren
- (7b) -: Mikroprozessoren
- (8): Ausgangsschaltung
- (9): Schaltausgang
- (10): Transportband
- (11): Palette
- (12): Fördermittel
- (13): Kiste
- (13'): Kiste
- (14): Markierung
- (15): Gehäuse
- (16): Sendelichtstrahlen
- (17): Sender
- (18): Empfangslichtstrahlen
- (19): Empfänger
- (20): Umlenkspiegel
- (21): Empfangsoptik
- (22): Austrittsfenster

## Patentansprüche

1. Optischer Sensor zur Überwachung einer Schutzzone (2) an einem Arbeitsmittel, mit einer Lichtempfangseinheit zur Erfassung von Objekten innerhalb der Schutzzone (2) und einer Auswerteeinheit (6), in welcher durch Auswertung von mit der Lichtempfangseinheit registrierten Objektmerkmalen eine Unterscheidung von sicherheitskritischen Objekten und nichtsicherheitskritischen Objekten durchführbar ist, wobei bei Erfassen eines sicherheitskritischen Objekts in der Schutzzone (2) eine Objektmeldung generiert wird und bei Erfassen eines nichtsicherheitskritischen Objekts in der Schutzzone (2) wenigstens ein Bereich dieser Schutzzone (2) überbrückbar ist, so dass ein Eindringen eines Objekts in diesen überbrückten Bereich nicht zur Generierung einer Objektmeldung führt, **dadurch gekennzeichnet, dass** die Objektmerkmale von auf den nichtsicherheitskritischen Objekten angeordneten Markierungen (14) gebildet sind, und dass mit dem optischen Sensor in den Markierungen (14) enthaltene Kodierungen erfassbar sind, wobei der überbrückte Bereich der Schutzzone (2) durch die Kodierungen vorgebbar ist.

2. Optischer Sensor nach Anspruch 1, **dadurch gekennzeichnet, dass** Objektmerkmale von nichtsicherheitskritischen Objekten in der Auswerteeinheit (6) abgespeichert sind.

3. Optischer Sensor nach Anspruch 2, **dadurch gekennzeichnet, dass** zur Bestimmung der in der Auswerteeinheit (6) abgespeicherten Objektmerkmale Einlernvorgänge durchführbar sind.

4. Optischer Sensor nach einem der Ansprüche 1 bis 3, **dadurch gekennzeichnet, dass** ein zeitlicher Verlauf der Überbrückung von Bereichen des Schutzfelds vorgebbar ist.

5. Optischer Sensor nach Anspruch 4, **dadurch gekennzeichnet, dass** an den nichtsicherheitskritischen Objekte Markierungen (14) angeordnet sind, deren Kodierungen Informationen über den zeitlichen Verlauf der Überbrückung des Schutzfelds enthalten.

6. Optischer Sensor nach Anspruch 5, **dadurch gekennzeichnet, dass** das nichtsicherheitskritische Objekt von einem Fahrzeug gebildet ist, und dass die Kodierungen der Markierungen (14) an diesem Fahrzeug abhängig von dessen Beladungszustand sind.

7. Optischer Sensor nach einem der Ansprüche 1 bis 6, **dadurch gekennzeichnet, dass** die Auswerteeinheit (6) einen redundanten Aufbau aufweist.

8. Optischer Sensor nach Anspruch 7, **dadurch gekennzeichnet, dass** die Auswerteeinheit (6) zwei sich gegenseitig überwachende Mikroprozessoren (7a, b) aufweist.

9. Optischer Sensor nach einem der Ansprüche 1 bis 8, **dadurch gekennzeichnet, dass** in der Auswerteeinheit (6) ein binäres Objektfeststellungssignal generiert wird, wobei ein Schaltzustand des Objektfeststellungssignals einer Objektmeldung entspricht und mit einem zweiten Schaltzustand "freie Schutzzone" des Objektfeststellungssignals das Arbeitsmittel in Betrieb gesetzt ist.

10. Optischer Sensor nach Anspruch 9, **dadurch gekennzeichnet, dass** das Objektfeststellungssignal über einen Schaltausgang an das Arbeitsmittel ausgebbar ist.

11. Optischer Sensor nach einem der Ansprüche 1 bis 10, **dadurch gekennzeichnet, dass** die Lichtempfangseinheit von einer Kamera (3) gebildet ist.

12. Optischer Sensor nach Anspruch 11, **dadurch gekennzeichnet, dass** die Kamera (3) von einer zeilenförmigen Anordnung von Empfangselementen gebildet ist.

13. Optischer Sensor nach Anspruch 11, **dadurch gekennzeichnet, dass** die Kamera (3) von einer matrixförmigen Anordnung von Empfangselementen gebildet ist.

14. Optischer Sensor nach einem der Ansprüche 12 oder 13, **dadurch gekennzeichnet, dass** die Kamera (3) von einem CMOS- oder CCD-Sensor gebildet ist.

15. Optischer Sensor nach einem der Ansprüche 11 bis 14, **dadurch gekennzeichnet, dass** dieser ein Beleuchtungssystem (4) zur Beleuchtung der Schutzzone (2) aufweist.

16. Optischer Sensor nach einem der Ansprüche 1 bis 10, **dadurch gekennzeichnet, dass** dieser als Flächendistanzsensor ausgebildet ist.

17. Optischer Sensor nach Anspruch 16, **dadurch gekennzeichnet, dass** dieser ein Distanzsensorelement mit einem Sendelichtstrahlen (16) emittierenden Sender (17) und einem die Lichtempfangseinheit bildenden, Empfangslichtstrahlen (18) empfangenden Empfänger (19) sowie eine Ablenkeinheit zur periodischen Ablenkung der Sendelichtstrahlen (16) in der Schutzzone (2) aufweist.

## Claims

1. Optical sensor for monitoring a protection zone (2) at a working means, with a light receiving unit for detection of objects within the protection zone (2) and an evaluating unit (6) in which a distinction between safety-critical objects and non-safety-critical objects can be performed by evaluation of object features registered by the light receiving unit, wherein on detection of a safety-critical object in the protection zone (2) an object report is generated and on detection of a non-safety-critical object in the protection zone (2) at least one region of this protection zone (2) can be bridged over so that penetration of an object into this bridged-over region does not lead to generation of an object report, **characterised in that** the object features are formed by markings arranged on the non-safety-critical objects and that codings contained in the markings (14) are detectable by the optical sensor, wherein the bridged-over region of the protection zone (2) is predeterminable by the codings.

2. Optical sensor according to claim 1, **characterised in that** the object features of non-safety-critical objects are stored in the evaluating unit (6).

3. Optical sensor according to claim 2, **characterised in that** learning processes can be performed for determination of the object features stored in the evaluating unit (6).

4. Optical sensor according to any one of claims 1 to 3, **characterised in that** a time course of the bridging over of regions of the protection field is predeterminable.

5. Optical sensor according to claim 4, **characterised in that** markings (14), the codings of which contain data about the time course of the bridging-over of the protection field, are arranged at the non-safety-critical objects.

6. Optical sensor according to claim 5, **characterised in that** the non-safety-critical object is formed by a vehicle and that the codings of the markings (14) at this vehicle are dependent on the load state thereof.

7. Optical sensor according to any one of claims 1 to 6, **characterised in that** the evaluating unit (6) has a redundant construction.

8. Optical sensor according to claim 7, **characterised in that** the evaluating unit (6) comprises two mutually monitoring microprocessors (7a, b).

9. Optical sensor according to any one of claims 1 to 8, **characterised in that** a binary object detection signal is generated in the evaluating unit (6), wherein a switching state of the object detection signal corresponds with an object report and the working means is placed in operation by a second switching state "free protection zone" of the object detection signal.

10. Optical sensor according to claim 9, **characterised in that** the object detection signal can be issued by way of a switch output at the working means.

11. Optical sensor according to any of claims 1 to 10, **characterised in that** the light receiving unit is formed by a camera (3).

12. Optical sensor according to claim 11, **characterised in that** the camera (3) is formed by a line-shaped arrangement of receiving elements.

13. Optical sensor according to claim 11, **characterised in that** the camera (3) is formed by a matrix-shaped arrangement of receiving elements.

14. Optical sensor according to one of claims 12 and 13, **characterised in that** the camera (3) is formed by a CMOS or CCD sensor.

15. Optical sensor according to any one of claims 11 to 14, **characterised in that** this comprises a lighting system (4) for illumination of the protection zone (2).

16. Optical sensor according to any one of claims 1 to 10, **characterised in that** this is constructed as an area distance sensor.

17. Optical sensor according to claim 16, **characterised in that** this comprises a distance sensor element with a transmitter (17) emitting transmitted light beams (16), a receiver (19) forming the light receiving unit and receiving received light beams (18) and a deflecting unit for periodic deflection of the transmitted light beams (16) into the protection zone (2).

## Revendications

1. Capteur optique destiné à la surveillance d'une zone de sécurité (2) sur un outil de travail, avec une unité de réception de lumière pour la saisie d'objets à l'intérieur de la zone de sécurité (2) et une unité d'évaluation (6) dans laquelle, par évaluation de caractéristiques d'objet enregistrées par l'unité de réception de lumière, une distinction entre objets critiques pour la sécurité et objets non critiques pour la sécurité est réalisable, sachant qu'en cas de saisie d'un objet critique pour la sécurité dans la zone de sécurité (2) une signalisation d'objet est générée et qu'en cas de saisie d'un objet non critique pour la sécurité dans la zone de sécurité (2) au moins une région de cette zone de sécurité (2) peut être court-circuitée de manière que la pénétration d'un objet dans cette région court-circuitée n'entraîne pas la génération d'une signalisation d'objet, **caractérisé en ce que** les caractéristiques d'objet sont formées de marquages (14) disposées sur les objets non critiques pour la sécurité, et que le capteur optique permet de saisir des codages contenus dans les marquages (14), la région court-circuitée de la zone de sécurité (2) pouvant être prédéfinie par les codages.

2. Capteur optique selon la revendication 1, **caractérisé en ce que** des caractéristiques d'objet d'objets non critiques pour la sécurité sont mémorisées dans l'unité d'évaluation (6).

3. Capteur optique selon la revendication 2, **caractérisé en ce que** des processus d'apprentissage peuvent être exécutés pour déterminer les caractéristiques d'objet mémorisées dans l'unité d'évaluation (6).

4. Capteur optique selon l'une des revendications 1 à 3, **caractérisé en ce qu'**une variation dans le temps du court-circuitage de régions du champ de protection peut être prédéfinie.

5. Capteur optique selon la revendication 4, **caractérisé en ce que** sur les objets non critiques pour la sécurité sont disposés des marquages (14) dont les codages contiennent des informations sur la variation dans le temps du court-circuitage du champ de protection.

6. Capteur optique selon la revendication 5, **caractérisé en ce que** l'objet non critique pour la sécurité est formé par un véhicule et que les codages des marquages (14) sur ce véhicule dépendent de son état de charge.

7. Capteur optique selon l'une des revendications 1 à 6, **caractérisé en ce que** l'unité d'évaluation (6) présente une structure redondante.

8. Capteur optique selon la revendication 7, **caractérisé en ce que** l'unité d'évaluation (6) présente deux microprocesseurs (7a, b) qui se surveillent mutuellement.

9. Capteur optique selon l'une des revendications 1 à 8, **caractérisé en ce qu'**un signal binaire de détection d'objet est généré dans l'unité d'évaluation (6), un état de commutation du signal de détection d'objet correspondant à une signalisation d'objet et l'outil de travail étant mis en service par un deuxième état de commutation « zone de sécurité libre » du signal de détection d'objet.

10. Capteur optique selon la revendication 9, **caractérisé en ce que** le signal de détection d'objet peut être délivré à l'outil de travail via une sortie de commutation.

11. Capteur optique selon l'une des revendications 1 à 10, **caractérisé en ce que** l'unité de réception de lumière est formée par une caméra (3).

12. Capteur optique selon la revendication 11, **caractérisé en ce que** la caméra (3) est formée par une disposition linéaire d'éléments de réception.

13. Capteur optique selon la revendication 11, **caractérisé en ce que** la caméra (3) est formée par une disposition matricielle d'éléments de réception.

14. Capteur optique selon l'une des revendications 12 ou 13, **caractérisé en ce que** la caméra (3) est formée par un capteur CMOS ou CCD.

15. Capteur optique selon l'une des revendications 11 à 14, **caractérisé en ce que** celui-ci présente un système d'éclairage (4) pour éclairer la zone de sécurité (2).

16. Capteur optique selon l'une des revendications 1 à 10, **caractérisé en ce que** celui-ci est réalisé sous forme de capteur de distance de surface.

17. Capteur optique selon la revendication 16, **caractérisé en ce que** celui-ci présente un élément capteur de distance comportant un émetteur (17) émettant des rayons lumineux d'émission (16) et un récepteur (19) recevant des rayons lumineux de réception (18) qui forme l'unité de réception de lumière, ainsi qu'une unité de déviation pour dévier périodiquement les rayons lumineux d'émission (16) dans la zone de sécurité (2).
